# EUROPEAN PATENT APPLICATION

(11) **EP 4 830 959 A1**
(43) Date of publication of application: **28.10.2026**
(21) Application number: 24907028.5
(22) Date of filing: 19.11.2024
(51) Int. Cl.: B60K 1/04, B62D 25/20, H01M 50/244, H01M 50/284

(54) **ELECTRICITY STORAGE DEVICE AND VEHICLE**

(30) Priority: 19.12.2023 JP 2023213931
(71) Applicant: TOYOTA JIDOSHA KABUSHIKI KAISHA, Toyota-shi, Aichi-ken 471-8571 (JP)
(72) Inventor: NOMURA, Naofumi, Toyota-shi, Aichi-ken, 471-8571 (JP); TAKAYANAGI, Junichi, Toyota-shi, Aichi-ken, 471-8571 (JP); ARIMA, Yuta, Toyota-shi, Aichi-ken, 471-8571 (JP); NISHIKI, Nobuyasu, Toyota-shi, Aichi-ken, 471-8571 (JP); ITO, Takuya, Kariya-shi, Aichi 448-8666 (JP); TAKAHASHI, Kazuya, Kurokawa-gun, Miyagi 981-3609 (JP); TOYAMA, Kenta, Kariya-shi, Aichi 448-8666 (JP)
(74) Representative: Cabinet Beau de Loménie
(86) International application number: PCT/JP2024/040920
(87) International publication number: WO 2025/134640

(57) **Abstract**

A power storage device includes an accommodation casing (30), a power storage stack (42) accommodated in the accommodation casing (30), electrical equipment (40) accommodated in the accommodation casing (30), and a coupling member (32) provided in the accommodation casing (30). With a direction from the power storage stack (42) toward the electrical equipment (40) being defined as a first direction (L1) and with a direction opposite to the first direction (L1) being defined as a second direction (L2), the coupling member (32) includes a first connection portion (36) connected to a first portion and a second connection portion (35) located at a side of the first direction (L1) relative to the first connection portion (36), located above the first connection portion (36), and connected to a vehicle.

## Description

### TECHNICAL FIELD

The present disclosure relates to a power storage device and a vehicle.

### BACKGROUND ART

Various proposals have conventionally been made for a power storage device arranged on a lower surface side of a vehicle. For example, a battery pack described in Japanese Patent Laying-Open No. 2022-128961 is arranged at a lower surface of a floor panel of a vehicle. In this battery pack, electrical equipment such as a high-voltage junction box and an electronic control unit (ECU) is accommodated.

### CITATION LIST

### PATENT LITERATURE

PTL 1: Japanese Patent Laying-Open No. 2022-128961

### SUMMARY OF INVENTION

### TECHNICAL PROBLEM

In the power storage device configured as described above, impact force may be applied to the vehicle while the power storage device is mounted on the vehicle.

At this time, impact force may be transmitted to the power storage device, and the electrical equipment in the power storage device may significantly be damaged.

The present disclosure was made in view of the above-described problems, and an object thereof is to provide a power storage device to be mounted on a vehicle, in which damage to electrical equipment is suppressed at the time of application of impact force to the vehicle.

### SOLUTION TO PROBLEM

A power storage device according to the present disclosure is a power storage device arranged in a lower portion of a vehicle. The power storage device includes an accommodation casing, a power storage stack accommodated in the accommodation casing, electrical equipment accommodated in the accommodation casing, and a coupling member provided in the accommodation casing. With a direction from the power storage stack toward the electrical equipment being defined as a first direction and with a direction opposite to the first direction being defined as a second direction, the accommodation casing includes a fixing base material. The fixing base material includes a first portion and a second portion provided at a position adjacent to the first portion in the second direction and being lower in bending stiffness than the first portion. The electrical equipment is fixed to the first portion. The coupling member includes a first connection portion connected to the first portion, a second connection portion located at a side of the first direction relative to the first connection portion, located above the first connection portion, and connected to the vehicle, and a main body portion located between the first connection portion and the second connection portion. The main body portion includes a portion that extends upward from a side of the first connection portion toward the second connection portion.

A power storage device according to the present disclosure is a power storage device arranged in a lower portion of a vehicle. The power storage device includes an accommodation casing, a power storage stack accommodated in the accommodation casing, electrical equipment accommodated in the accommodation casing, and a coupling member provided in the accommodation casing. With a direction from the power storage stack toward the electrical equipment being defined a first direction and with a direction opposite to the first direction being defined as a second direction, the accommodation casing includes a fixing base material. The fixing base material includes a first portion and a second portion adjacent to the first portion in the second direction. The first portion includes a reinforcement portion. The electrical equipment is fixed to the first portion. The coupling member includes a first connection portion fixed to the first portion, a second connection portion located at vehicle front relative to the first connection portion, located above the first connection portion, and fixed to the vehicle, and a main body portion located between the first connection portion and the second connection portion. The main body portion includes a portion that extends upward from a side of the first connection portion toward the second connection portion.

### ADVANTAGEOUS EFFECTS OF INVENTION

The power storage device according to the present disclosure is a power storage device to be mounted on a vehicle, and damage to electrical equipment can be suppressed at the time of application of impact force to the vehicle.

### BRIEF DESCRIPTION OF DRAWINGS

Fig. 1 is a diagram schematically showing a vehicle 2 on which a power storage device 1 is mounted.
Fig. 2 is a bottom view showing a bottom of vehicle 2.
Fig. 3 is a lateral cross-sectional view showing a configuration of power storage device 1 and surroundings thereof.
Fig. 4 is a partially exploded perspective view when power storage device 1 is viewed from a bottom side.
Fig. 5 is a perspective view showing a reinforcement member 44.
Fig. 6 is a lateral cross-sectional view showing a configuration of a partition member 47 and surroundings thereof.
Fig. 7 is a lateral cross-sectional view showing a configuration of an equipment fixing portion 53 and surroundings thereof.
Fig. 8 is a lateral cross-sectional view schematically showing a state in which impact force is applied from the front of vehicle 2.
Fig. 9 is a lateral cross-sectional view schematically showing a state in which a suspension member 9 is displaced in a rearward direction L2 further from the state shown in Fig. 8.
Fig. 10 is a cross-sectional view showing a power storage device 1A.
Fig. 11 is a cross-sectional view showing a power storage device 1B.
Fig. 12 is a cross-sectional view showing a power storage device 1C.
Fig. 13 is a cross-sectional view showing a power storage device 1D.
Fig. 14 is a cross-sectional view showing a power storage device 1E.
Fig. 15 is a cross-sectional view showing a power storage device 1F.
Fig. 16 is a cross-sectional view showing a power storage device 1G.
Fig. 17 is a cross-sectional view showing a power storage device 1H.
Fig. 18 is a bottom view showing a bottom of a vehicle 2J.
Fig. 19 is a cross-sectional view schematically showing vehicle 2J and a power storage device 1J.
Fig. 20 is a plan view schematically showing a lower case 39, reinforcement member 44, and equipment fixing portions 53A and 53B and equipment fixing portions 54A and 54B.
Fig. 21 is a plan view schematically showing a distribution of bending stiffness.
Fig. 22 is a plan view schematically showing lower case 39, a reinforcement member 44L, and equipment fixing portions 53C and 53D and equipment fixing portions 54C and 54D.
Fig. 23 is a plan view schematically showing a distribution of bending stiffness.
Fig. 24 is a plan view schematically showing lower case 39, reinforcement member 44, and equipment fixing portions 53E and 53F and equipment fixing portions 54E and 54F.
Fig. 25 is a plan view schematically showing a distribution of bending stiffness.

### DESCRIPTION OF EMBODIMENTS

An embodiment of the present disclosure will be described with reference to the drawings. In the drawings referred to below, the same or corresponding members have the same reference characters allotted.

### (First Embodiment)

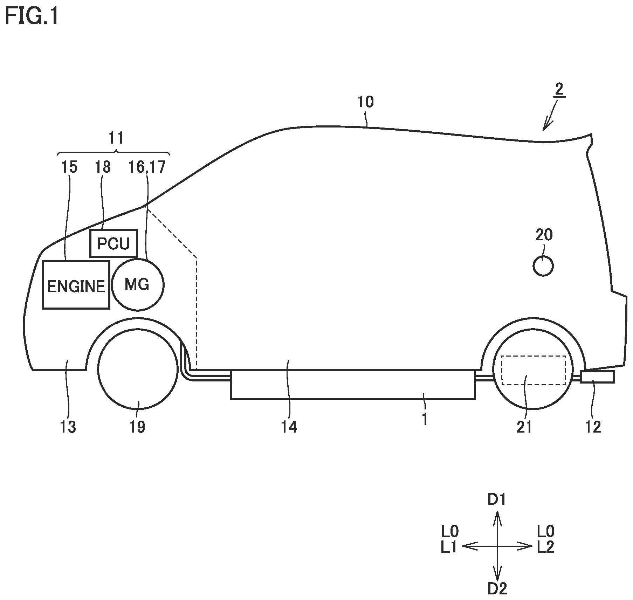

A power storage device 1 according to the present first embodiment will be described with reference to Fig. 1 or the like. Fig. 1 is a diagram schematically showing a vehicle 2 on which power storage device 1 is mounted.

Vehicle 2 includes power storage device 1, a vehicle skeleton 10, a drive device 11, an exhaust pipe 12, a charging portion 20, and a fuel tank 21. Vehicle skeleton 10 defines an accommodation space 13 in which drive device 11 is accommodated and a compartment space 14 in which a driver and/or a passenger get(s) on board. Accommodation space 13 is provided at a side of a front direction L1 relative to compartment space 14.

Drive device 11 includes an engine 15, motor generators 16 and 17, and a PCU 18.

Engine 15 generates driving force for driving driving wheels 19 by burning fuel supplied from fuel tank 21. Exhaust pipe 12 is connected to engine 15.

PCU 18 includes an inverter and a converter. For example, PCU 18 converts direct-current (DC) power supplied from power storage device 1 to alternating-current (AC) power and supplies AC power to motor generator 16. Motor generator 16 generates driving force for rotating driving wheels 19 with power supplied from PCU 18. Motor generator 17 mainly functions as a generator.

Charging portion 20 is formed such that a charging plug of an externally provided charging stand is connectable thereto. Power storage device 1 is formed as being chargeable with power supplied from a charging plug connected to charging portion 20.

In the present embodiment, vehicle 2 is what is called a plug-in hybrid electric vehicle, however, vehicle 2 may be a hybrid electric vehicle or a battery electric vehicle.

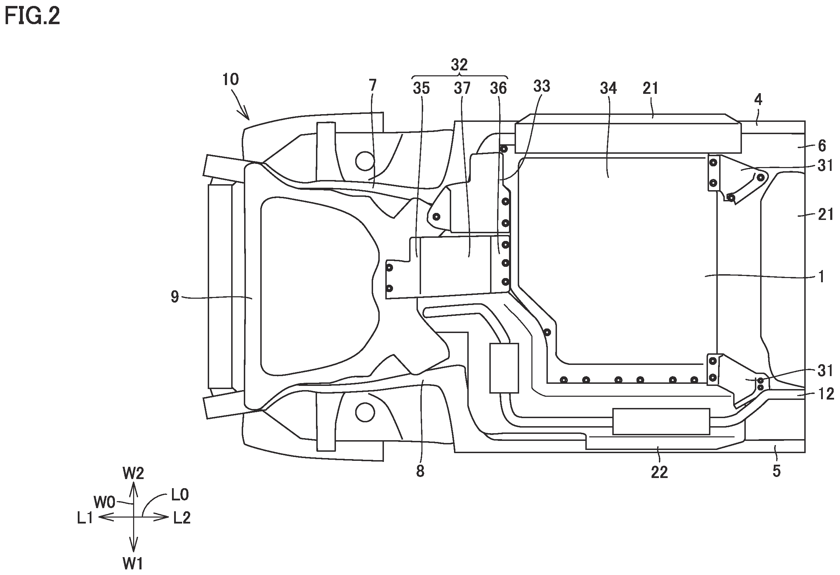

Fig. 2 is a bottom view showing a bottom of vehicle 2. In Fig. 2 or the like, "L0" represents a front-rear direction of vehicle 2, "L1" represents a front direction of vehicle 2, and "L2" represents a rear direction L2 of vehicle 2. "WO" represents a vehicle width direction, "W1" represents a right direction of a vehicle width of vehicle 2, and "W2" represents a left direction of the vehicle width of vehicle 2.

Vehicle skeleton 10 includes a left side rocker 4 and a right side rocker 5, a floor panel 6, a left front side member 7 and a right front side member 8, and a suspension member 9.

The bottom of vehicle skeleton 10 is formed by left side rocker 4 and right side rocker 5, floor panel 6, left front side member 7 and right front side member 8, and suspension member 9.

Left side rocker 4 and right side rocker 5 are arranged at an interval in vehicle width direction WO of vehicle 2, and left side rocker 4 and right side rocker 5 are formed to extend in front-rear direction L0. Floor panel 6 is arranged at upper surfaces of left side rocker 4 and right side rocker 5.

Floor panel 6 and left front side member 7 and right front side member 8 are located at a lower side of accommodation space 13, and left front side member 7 and right front side member 8 are arranged at an interval in vehicle width direction WO. Left front side member 7 is connected to a front end portion of left side rocker 4, and right front side member 8 is connected to a front end portion of right side rocker 5.

Suspension member 9 is arranged below accommodation space 13 and connected to left front side member 7 and right front side member 8, or the like. Drive device 11 or the like is arranged at an upper surface of suspension member 9.

Fuel tank 21 is fixed to the bottom of vehicle skeleton 10, and fuel tank 21 is arranged at a rear side of the bottom. Power storage device 1 is fixed to the bottom of vehicle skeleton 10. Power storage device 1 is arranged in front direction L1 relative to fuel tank 21. Power storage device 1 is arranged as being displaced toward width left direction W2 in vehicle width direction WO.

Exhaust pipe 12 is connected to fuel tank 21, and exhaust pipe 12 is formed to pass through a side surface side of power storage device 1 and extend in front direction L1.

Exhaust pipe 12 is provided with a heat insulating cover 22. Heat insulating cover 22 is provided to cover exhaust pipe 12 from above. Heat insulating cover 22 is arranged between exhaust pipe 12 and power storage device 1 and between exhaust pipe 12 and vehicle skeleton 10.

Power storage device 1 is fixed to vehicle skeleton 10. Power storage device 1 includes an accommodation casing (not shown), an impact absorbing member 29, a shear panel 34 that covers the accommodation casing, a protection plate 32 and a protection plate 33, and a plurality of fixing brackets 31. Power storage device 1 is fixed to vehicle skeleton 10 by fixing brackets 31.

Impact absorbing member 29 is arranged adjacently to power storage device 1 in vehicle width direction WO. Impact absorbing member 29 is fixed to left side rocker 4.

Protection plate 32 and protection plate 33 are arranged adjacently to each other in vehicle width direction WO. A front end portion of protection plate 33 is fixed to suspension member 9, and a rear end portion thereof is fixed to a reinforcement member 44 which will be described later.

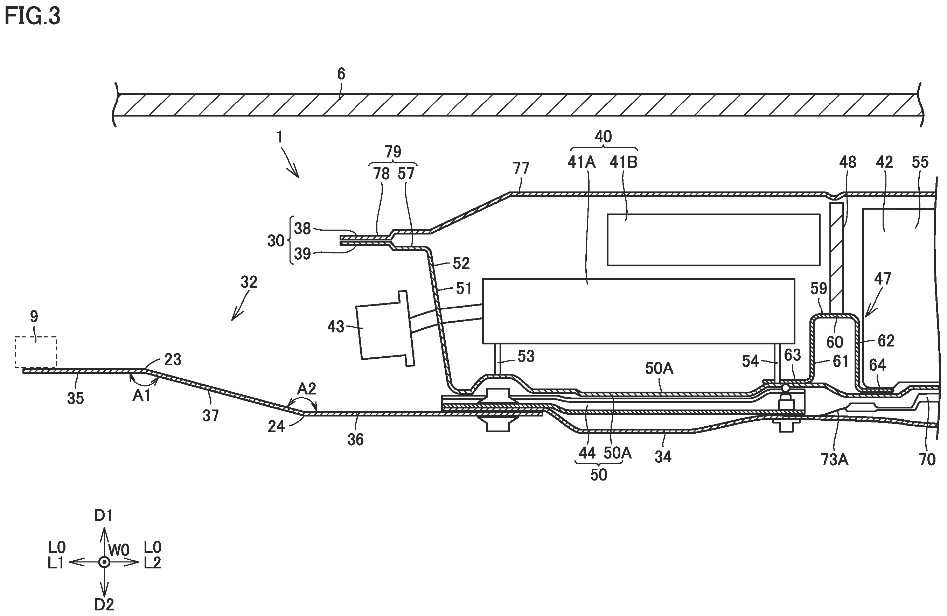

Fig. 3 is a lateral cross-sectional view showing a configuration of power storage device 1 and surroundings thereof. Protection plate 32 includes a second connection portion 35, a first connection portion 36, and a main body portion 37. Second connection portion 35 is located in front direction L1 relative to first connection portion 36. Second connection portion 35 is connected to suspension member 9. Specifically, second connection portion 35 is fixed to suspension member 9 by a plurality of bolts or the like. First connection portion 36 is fixed to reinforcement member 44 which will be described later. Second connection portion 35 is located above first connection portion 36 and located at a side of front direction L1 of vehicle 2. Main body portion 37 is formed to extend upward from first connection portion 36 toward second connection portion 35.

A first bent portion 24 is formed at a portion of connection between first connection portion 36 and main body portion 37, and a second bent portion 23 is formed at a portion of connection between second connection portion 35 and main body portion 37.

A bending angle of second bent portion 23 in a normal state is referred to as a bending angle A1, and a bending angle of first bent portion 24 is referred to as a bending angle A2. Bending angle A1 and bending angle A2 are, for example, not smaller than three degrees and not larger than fifteen degrees.

Power storage device 1 includes an accommodation casing 30, electrical equipment 40, a power storage stack 42, a connector 43, shear panel 34, a cooling device 46, a partition member 47, and a separation wall 48.

Accommodation casing 30 includes an upper case 38 and a lower case 39. Upper case 38 is formed to open downward, and upper case 38 is fixed to lower case 39. Upper case 38 and lower case 39 are formed, for example, of a metal material such as an aluminum alloy.

Lower case 39 includes a bottom plate (fixing base material) 50, a peripheral wall 51, and a lower flange 57. Bottom plate 50 includes a bottom main body 50A and reinforcement member 44. Reinforcement member 44 is provided at a lower surface of bottom main body 50A. Peripheral wall 51 is formed to stand upward from an outer peripheral edge portion of bottom main body 50A. Lower flange 57 is formed to project outward from an upper end of peripheral wall 51. Peripheral wall 51 includes a front wall 52 located in front direction L1.

Upper case 38 includes a top plate 77 and an upper flange 78. Flange 78 is formed at an outer peripheral edge portion of top plate 77, and flange 78 is formed to project outward. Upper flange 78 and lower flange 57 are welded or the like to each other, a flange 79 is formed by upper flange 78 and lower flange 57, and flange 79 is formed to project outward from peripheral wall 51.

Electrical equipment 40, power storage stack 42, and partition member 47 are accommodated in accommodation casing 30. When viewed from vehicle width direction WO, electrical equipment 40 is arranged in front direction L1 relative to power storage stack 42. Electrical equipment 40 being located in front direction L1 relative to power storage stack 42 means, for example, that the center of electrical equipment 40 in front-rear direction L0 is located at the side of front direction L1 relative to the center of power storage stack 42 in front-rear direction L0 when electrical equipment 40 and power storage stack 42 are viewed from vehicle width direction WO.

Electrical equipment 40 includes at least one of connection equipment 41A and control equipment 41B. In the present embodiment, both of connection equipment 41A and control equipment 41B are mounted on power storage device 1, and electrical equipment 40 includes both of connection equipment 41A and control equipment 41B.

Connection equipment 41A includes, for example, at least one of an SMR that switches electrical connection between power storage stack 42 and PCU 18, a charging relay that switches electrical connection between power storage stack 42 and charging portion 20, and a high-voltage electrical circuit. Control equipment 41B is arranged above connection equipment 41A. Control equipment 41B includes a control device such as a battery ECU.

An end portion of connection equipment 41A in front direction L1 is located at a side of front wall 52 relative to an end portion of control equipment 41B in front direction L1. Connector 43 is connected to connection equipment 41A, and connector 43 is arranged at an outer surface side of front wall 52. A high-voltage cable is connected to connector 43. In front-rear direction L0, first bent portion 24 is located at the side of front direction L1 side relative to connector 43.

Electrical equipment 40 is fixed to bottom plate 50 by a plurality of equipment fixing portions 53 and a plurality of equipment fixing portions 54. Equipment fixing portions 54 are arranged at a side of rear direction L2 relative to equipment fixing portions 53. Equipment fixing portions 53 are provided at intervals in vehicle width direction WO, and equipment fixing portions 54 are also provided at intervals in vehicle width direction WO.

Power storage stack 42 is arranged at an interval in rear direction L2 relative to electrical equipment 40. Power storage stack 42 includes a plurality of power storage modules 55, and each power storage module 55 includes a plurality of power storage cells. The plurality of power storage modules 55 are arranged in front-rear direction L0, and the power storage cells are arranged in vehicle width direction WO.

Partition member 47 is fixed to an inner surface of bottom main body 50A. Partition member 47 is formed to extend in vehicle width direction WO. Partition member 47 includes a main body 59, a flange 63, and a flange 64.

Main body 59 includes a top plate 60 and longitudinal walls 61 and 62. Longitudinal wall 61 is formed to extend downward from a front side of top plate 60 and longitudinal wall 62 is formed to extend downward from a rear side of top plate 60.

Main body 59 is located between equipment fixing portions 54 and power storage stack 42 in front-rear direction L0. Main body 59 of partition member 47 is arranged to overlap with electrical equipment 40 in front-rear direction L0. Specifically, top plate 60 of partition member 47 is located above a lower surface of control equipment 41B.

Flange 63 is formed to extend toward front direction L1 from a lower side of longitudinal wall 61, and flange 64 is formed to extend toward rear direction L2 from a lower side of longitudinal wall 62.

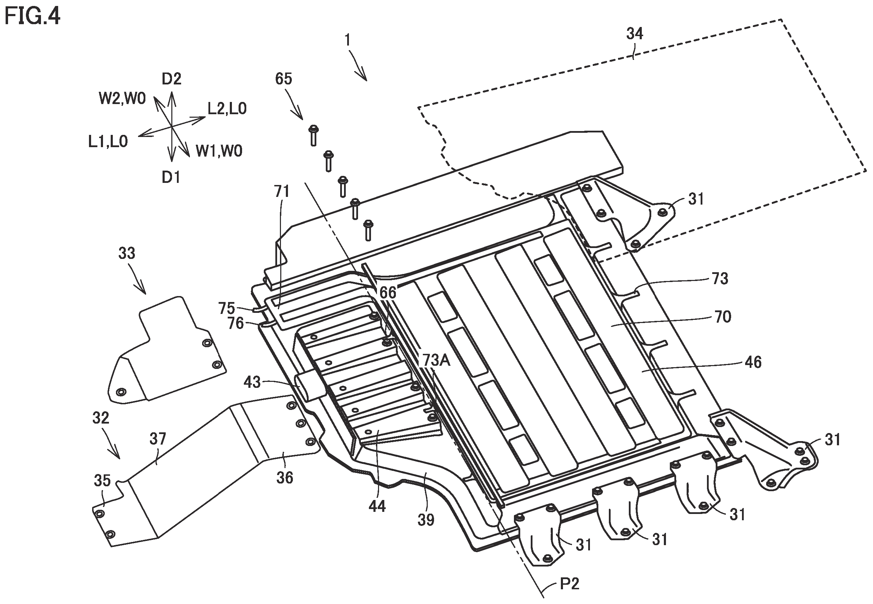

Fig. 4 is a partially exploded perspective view when power storage device 1 is viewed from the bottom side. In this Fig. 4, shear panel 34 has been removed.

Protection plates 32 and 33 and cooling device 46 are arranged at a lower surface of lower case 39.

Shear panel 34 is provided to cover lower case 39, cooling device 46, and reinforcement member 44. Shear panel 34 is fixed to impact absorbing member 29.

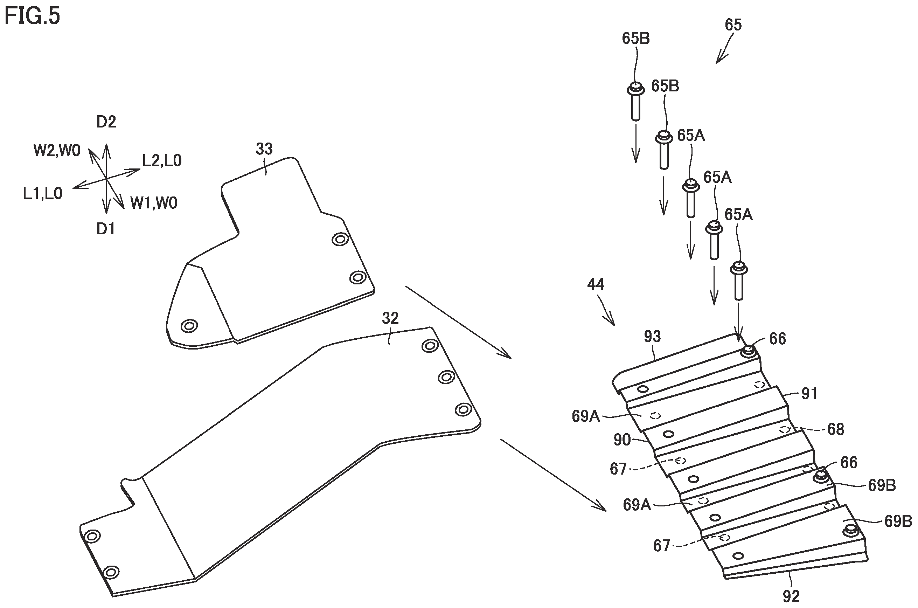

Fig. 5 is a perspective view showing reinforcement member 44. Reinforcement member 44 includes a front side 90 located in front direction L1, a rear side 91 located in rear direction L2, a side 92 located in width right direction W1, and a side 93 located in width left direction W2.

Reinforcement member 44 includes a plurality of bulging portions 69A and a plurality of bulging portions 69B. Bulging portion 69A is formed to bulge upward and bulging portion 69B is formed to bulge downward. Bulging portion 69A and bulging portion 69B are formed to extend in front-rear direction L0. Bulging portion 69A and bulging portion 69B are alternately formed in vehicle width direction WO.

A welded portion 67 is formed at a side of a front end portion of bulging portion 69A, and a welded portion 68 is formed at a side of a rear end portion of bulging portion 69A. Welded portion 67 and welded portion 68 fix reinforcement member 44 to the lower surface of bottom main body 50A.

A fixing member 65 is provided at a front end portion of bulging portion 69B, and a fixing member 66 is provided at a rear end portion of bulging portion 69B.

A plurality of fixing members 65 include a plurality of fixing members 65A and a plurality of fixing members 65B. Fixing member 65A fixes protection plate 32 to a lower surface of reinforcement member 44. Fixing member 65B fixes protection plate 33 to the lower surface of reinforcement member 44. Fixing member 66 fixes a not-shown shear panel to the lower surface of reinforcement member 44. Fixing member 66 and welded portion 68 are arranged in vehicle width direction WO, and fixing members 65A and 65B and welded portion 67 are arranged in vehicle width direction WO. In other words, fixing member 66 and welded portion 68 are provided at the same position in front-rear direction L0, and fixing members 65A and 65B and welded portion 67 are provided at the same position in front-rear direction L0.

Referring back to Fig. 4, cooling device 46 includes a cooling main body 70, a refrigerant circulation portion 71, and a plurality of fixing brackets 73. As shown in Fig. 3, power storage stack 42 is arranged above cooling main body 70, and power storage stack 42 is cooled by refrigerant that flows in refrigerant circulation portion 71. In cooling main body 70, a refrigerant passage through which refrigerant circulates is formed.

In refrigerant circulation portion 71, a supply passage for supply of refrigerant to cooling main body 70 and a discharge passage through which refrigerant discharged from cooling main body 70 circulates are formed. Refrigerant is, for example, liquid refrigerant.

A pipe 75 and a pipe 76 are connected to refrigerant circulation portion 71. Pipe 75 and pipe 76 are arranged adjacently to connector 43 in vehicle width direction WO. Protection plate 32 is provided to cover connector 43 from below, and protection plate 33 is provided to cover pipe 75 and pipe 76 from below.

The plurality of fixing brackets 73 fix cooling device 46 to lower case 39. Each fixing bracket 73 is formed in a shape of a piece. Fixing brackets 73 include a plurality of fixing brackets 73A connected to reinforcement member 44.

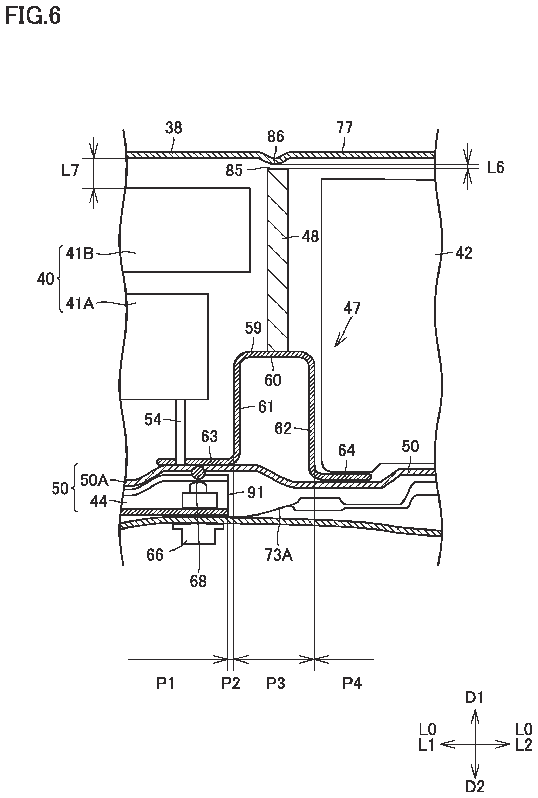

Fig. 6 is a lateral cross-sectional view showing a configuration of partition member 47 and surroundings thereof. Separation wall 48 is formed to extend upward from an upper surface of top plate 60. A distance L6 between an upper end 85 of separation wall 48 and upper case 38 is shorter than a distance L7 between control equipment 41B and upper case 38. Furthermore, separation wall 48 is formed to extend in vehicle width direction WO. Opposing side portions of separation wall 48 in vehicle width direction WO are connected to peripheral wall 51 of lower case 39. Separation wall 48 is connected, for example, to a sidewall of peripheral wall 51. Separation wall 48 may directly be connected to peripheral wall 51, or may be connected to the sidewall by a bracket or the like.

At top plate 77 of upper case 38, a curved portion 86 is formed in a portion located above upper end 85. In an example shown in this Fig. 6, curved portion 86 is formed as being recessed downward. Curved portion 86 is formed to extend in vehicle width direction WO.

Equipment fixing portion 54 is connected to flange 63 and bottom main body 50A, and equipment fixing portion 54 is arranged at an interval in front direction L1 from longitudinal wall 61. Rear side 91 of reinforcement member 44 is located in a direction D2 downward from flange 63, and located at the side of front direction L1 relative to longitudinal wall 61. In front-rear direction L0, equipment fixing portion 54 is located in front direction L1 relative to rear side 91.

A portion of bottom plate 50 of lower case 39 located in front of rear side 91 is referred to as a first portion P1, and a portion thereof located between rear side 91 and longitudinal wall 61 is referred to as a second portion P2. Second portion P2 is located at a position adjacent to first portion P1 in rear direction L2.

A portion of bottom plate 50 of lower case 39 where main body 59 of partition member 47 is located is referred to as a third portion P3. Third portion P3 is located at a position adjacent to second portion P2 in rear direction L2. Furthermore, a portion of bottom plate 50 of lower case 39 located at the side of rear direction L2 relative to third portion P3 is referred to as a fourth portion P4.

Equipment fixing portion 54 is arranged in first portion P1. Power storage stack 42 is fixed to fourth portion P4. As shown in Fig. 4, fixing bracket 31 is arranged at the side of rear direction L2 relative to second portion P2.

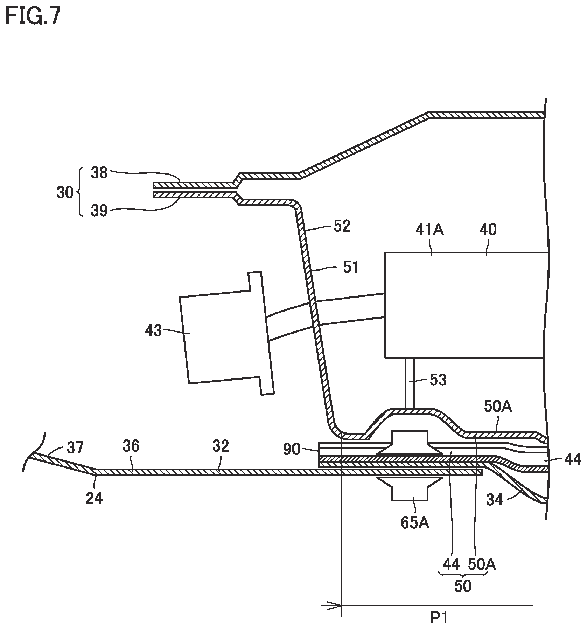

Fig. 7 is a lateral cross-sectional view showing a configuration of equipment fixing portion 53 and surroundings thereof. Front side 90 of reinforcement member 44 is located at the side of front direction L1 relative to a front end portion at the side of front direction L1 of bottom main body 50A. In front-rear direction L0, first portion P1 of bottom plate 50 is a portion of bottom plate 50 located between rear side 91 shown in Fig. 6 and the front end portion at the side of front direction L1 of bottom main body 50A. Equipment fixing portion 53 is fixed to first portion P1.

In Figs. 6 and 7, in the portion of bottom plate 50 where first portion P1 is located, reinforcement member 44 and bottom main body 50A are located. In the portion of bottom plate 50 where second portion P2 is located, on the other hand, reinforcement member 44 is not provided. Therefore, a second moment of area M1 in first portion P1 is larger than a second moment of area M2 in second portion P2. Bending stiffness B1 in first portion P1 is higher than bending stiffness B2 in second portion P2.

Bulging portions 69A and 69B are formed in reinforcement member 44, and bending stiffness B1 in first portion P1 is higher than in an example where reinforcement member 44 is in a flat plate shape. A metal material that forms reinforcement member 44 is higher in Young's modulus than a metal material that forms lower case 39. A difference between bending stiffness B1 and bending stiffness B2 is thus large.

Main body 59 of partition member 47 is located in third portion P3, and a second moment of area M3 is larger than second moment of area M2. Therefore, bending stiffness B3 in third portion P3 is higher than bending stiffness B2 in second portion P2. A metal material that forms partition member 47 is higher in Young's modulus than the metal material that forms lower case 39. Therefore, a difference between bending stiffness B3 and bending stiffness B2 is large.

In vehicle 2 including power storage device 1 configured as described above, impact force may be applied from the front of vehicle 2.

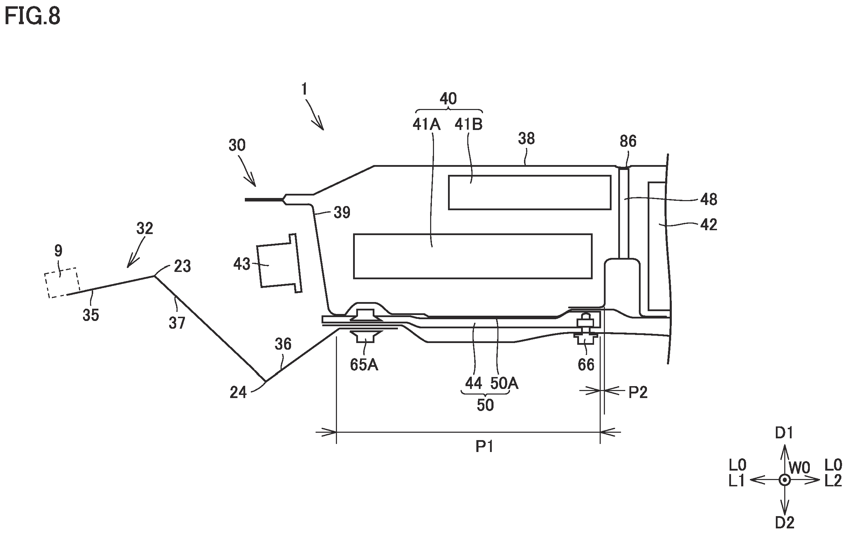

Fig. 8 is a lateral cross-sectional view schematically showing a state in which impact force is applied from the front of vehicle 2. Application of impact force from the front of vehicle 2 displaces suspension member 9 toward rear direction L2. Accordingly, second bent portion 23 is deformed such that bending angle A1 of second bent portion 23 becomes smaller. Accordingly, an end portion of main body portion 37 at a side of first bent portion 24 and first bent portion 24 are displaced downward. As first bent portion 24 is displaced downward, first bent portion 24 is deformed such that bending angle A2 becomes smaller, and a portion of first connection portion 36 located in front direction L1 relative to a portion thereof fixed by fixing member 65A is bent.

At this time, since first bent portion 24 is located at the side of front direction L1 relative to connector 43, contact of second bent portion 23 and main body portion 37 with connector 43 can be suppressed.

As first bent portion 24 is displaced downward, a load F1 and a bending moment BM1 are applied downward to fixing member 65A, which is a portion that fixes first connection portion 36 and reinforcement member 44.

Since bending stiffness B1 of first portion P1 is high and bending stiffness B2 of second portion P2 is low, bending at second portion P2 is likely.

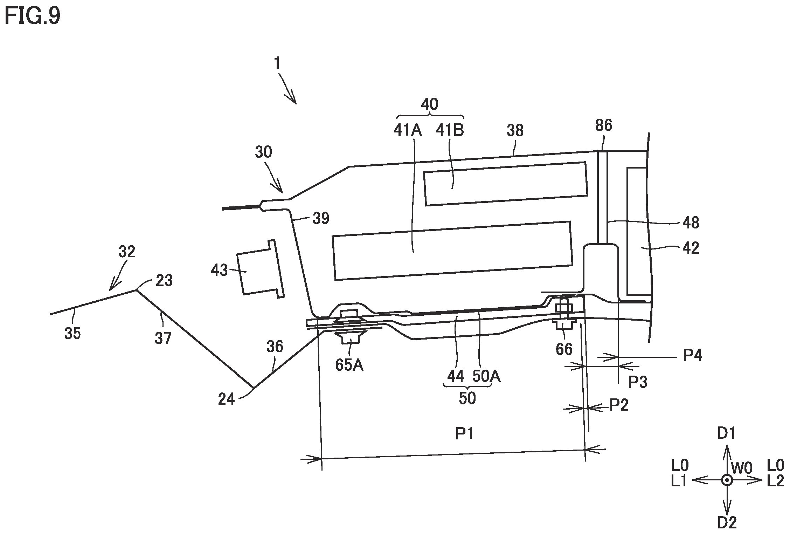

Fig. 9 is a lateral cross-sectional view schematically showing a state in which suspension member 9 is displaced in rearward direction L2 further from the state shown in Fig. 8.

As shown in this Fig. 9, bending at second portion P2 occurs. First portion P1 is located at the side of front direction L1 relative to second portion P2, and equipment fixing portion 53 and equipment fixing portion 54 are located in first portion P1.

Therefore, electrical equipment 40 and first portion P1 are displaced downward integrally around second portion P2. As electrical equipment 40 is integrally displaced, damage to electrical equipment 40 can be suppressed. Specifically, if a portion where bottom plate 50 bends is located between equipment fixing portion 53 and equipment fixing portion 54 in front-rear direction L0, external force to bend electrical equipment 40 is applied to electrical equipment 40 when bottom plate 50 bends, and a harmful effect of damage to electrical equipment 40 may occur. In power storage device 1 according to the present embodiment, on the other hand, occurrence of such a harmful effect can be suppressed.

Second portion P2 is located between first portion P1 having bending stiffness higher than bending stiffness B2 and third portion P3 having bending stiffness higher than bending stiffness B2 in front-rear direction L0.

Therefore, when load F1 and bending moment BM1 are applied to fixing member 65A, bending at second portion P2 is likely, and bending at a position displaced from second portion P2 can be suppressed.

With bending at second portion P2, suppression of deformation of fourth portion P4 located at the side of rear direction L2 relative to second portion P2 is suppressed. Fourth portion P4 may be higher in bending stiffness than second portion P2. For example, bending stiffness of fourth portion P4 can be increased by arranging a reinforcement member in fourth portion P4 or by increasing a thickness of a portion of bottom plate 50 where fourth portion P4 is located. Bending stiffness of fourth portion P4 leads to reduction in bending stiffness of first portion P1.

Since power storage stack 42 is fixed to fourth portion P4 and deformation of fourth portion P4 is suppressed, damage to power storage stack 42 can be suppressed.

When first portion P1 is displaced downward around second portion P2, curved portion 86 of upper case 38 is deformed to extend. Cracking of upper case 38 can thus be suppressed. By suppressing occurrence of cracking in upper case 38, entry of water, a foreign matter, or the like into power storage device 1 from the outside can be suppressed even after impact force is applied.

In Fig. 6, distance L6 between upper end 85 of separation wall 48 and upper case 38 is shorter than distance L7 between control equipment 41B and upper case 38. Therefore, when upper case 38 is deformed, separation wall 48 can support upper case 38 before upper case 38 comes in contact with control equipment 41B. Damage to control equipment 41B due to deformation of upper case 38 can thus be suppressed.

Separation wall 48 is formed to extend in vehicle width direction WO. Therefore, even when control equipment 41B is displaced in rear direction L2 due to impact force, separation wall 48 can support control equipment 41B and contact of control equipment 41B with power storage stack 42 can be suppressed.

Rear side 91 of reinforcement member 44 is located below flange 63. Since flange 63 is thus located above rear side 91, flange 63 functions as a protective wall when bottom plate 50 is deformed around second portion P2. Even when bottom plate 50 is deformed in second portion P2, contact of deformed bottom plate 50 with electrical equipment 40 or the like can thus be suppressed.

Top plate 60 of partition member 47 is located above the lower surface of control equipment 41B. Therefore, even when control equipment 41B is displaced in rear direction L2 by impact force, control equipment 41B is supported by partition member 47, and contact of control equipment 41B with power storage stack 42 can be suppressed.

In Fig. 4, cooling main body 70 of cooling device 46 is arranged at the lower surface of bottom plate 50 in fourth portion P4. Therefore, when bottom plate 50 is bent at second portion P2, damage to cooling main body 70 can be suppressed.

Fixing bracket 73A connects cooling main body 70 and reinforcement member 44 to each other. When bottom plate 50 is bent at second portion P2 and reinforcement member 44 is displaced, fixing bracket 73A is also deformed as being bent.

Fixing bracket 73A, on the other hand, is formed in a shape of a piece. Therefore, when fixing bracket 73A is bent, application of a large load to cooling main body 70 is suppressed. Deformation of cooling main body 70 when fixing bracket 73A is deformed can thus be suppressed.

### (Second Embodiment)

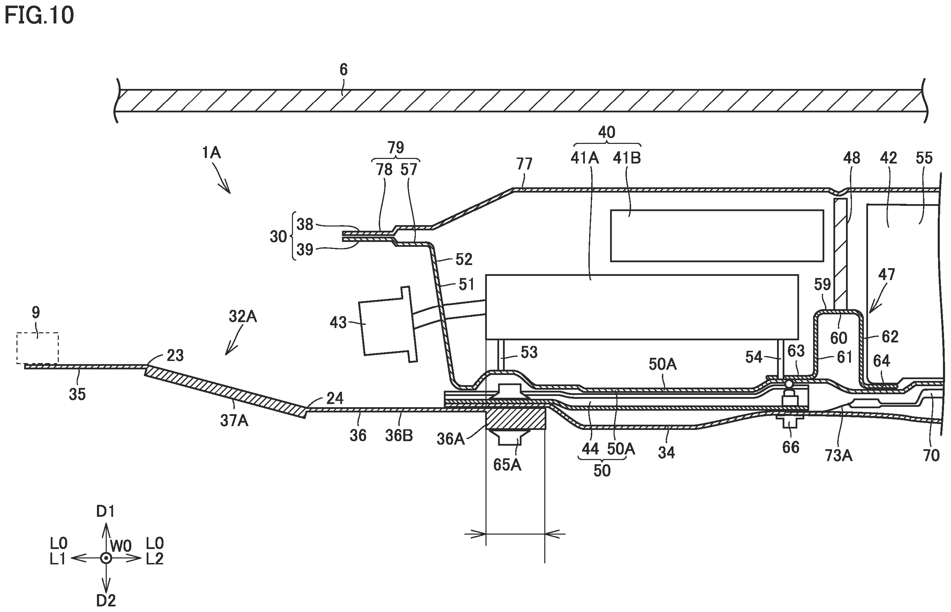

A power storage device 1A according to a second embodiment will be described with reference to Fig. 10 or the like. Power storage device 1A includes a protection plate 32A. Power storage device 1A is substantially similar in configuration to power storage device 1 except for protection plate 32A.

Fig. 10 is a cross-sectional view showing power storage device 1A. Protection plate 32A includes first connection portion 36, second connection portion 35, and a main body portion 37A.

First connection portion 36 includes a large thickness portion 36A. Large thickness portion (overlapping portion) 36A of first connection portion 36 overlaps with electrical equipment 40 in the upward-downward direction.

Large thickness portion 36A is formed to be larger in thickness than portions of protection plate 32A other than large thickness portion 36A. Large thickness portion 36A is higher in bending stiffness than the portions other than large thickness portion 36A.

First connection portion 36 includes large thickness portion 36A and a small thickness portion 36B. Small thickness portion 36B is located at the side of front direction L1 relative to small thickness portion 36B. Small thickness portion 36B is lower in bending stiffness than large thickness portion 36A.

Main body portion 37A is formed to be larger in thickness than second connection portion 35 and small thickness portion 36B. Main body portion 37A is higher in bending stiffness than both of second connection portion 35 and small thickness portion 36B.

In a vehicle on which power storage device 1A configured as described above is mounted, when impact force is applied from the front of vehicle 2, protection plate 32A is deformed.

At this time, since large thickness portion 36A is higher in bending stiffness than small thickness portion 36B, small thickness portion 36B is bent downward around a portion of connection between small thickness portion 36B and large thickness portion 36A. Therefore, contact of small thickness portion 36B with connector 43 can be suppressed.

In particular, since deformation of large thickness portion 36A is less likely, flaw in bottom plate 50 caused by large thickness portion 36A can be suppressed.

Since main body portion 37A is higher in bending stiffness than small thickness portion 36B, first bent portion 24 is readily bent as being displaced downward. Small thickness portion 36B thus easily moves away from connector 43 at the time of deformation.

### (Third Embodiment)

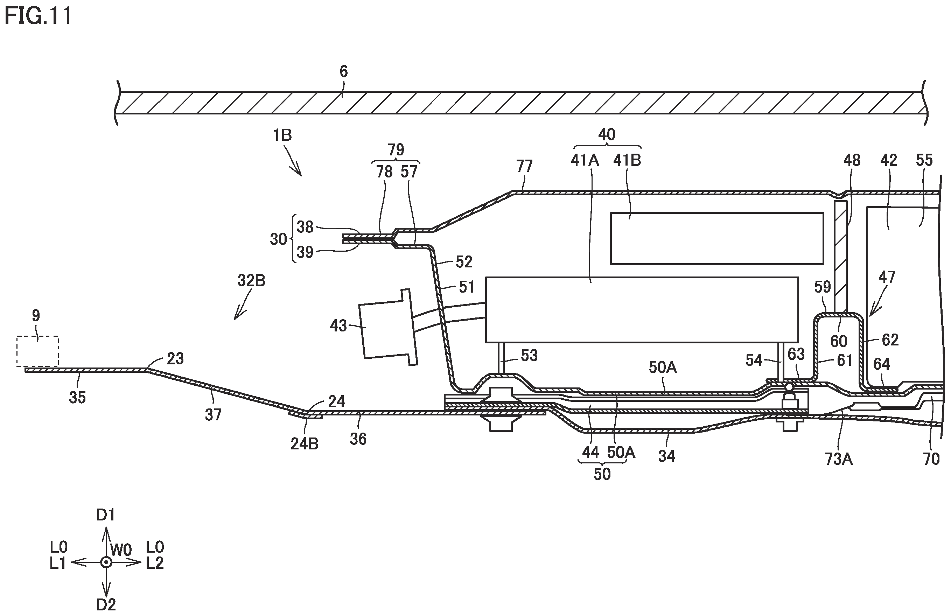

A power storage device 1B according to a third embodiment will be described with reference to Fig. 11 or the like. Power storage device 1B includes a protection plate 32B. Power storage device 1B is substantially similar in configuration to power storage device 1 except for protection plate 32B.

Fig. 11 is a cross-sectional view showing power storage device 1B. Protection plate 32B includes first connection portion 36, second connection portion 35, main body portion 37, and a reinforcement plate 24B. Reinforcement plate 24B is fixed to a lower surface of first bent portion 24.

Therefore, first bent portion 24 is higher in bending stiffness than second bent portion 23.

Therefore, when impact force is applied from the front of vehicle 2 and protection plate 32B is deformed, large bending at first bent portion 24 can be suppressed.

If first bent portion 24 is significantly bent and main body portion 37 is displaced around first bent portion 24, main body portion 37 tends to come in contact with connector 43.

In protection plate 32B, on the other hand, large deformation of first bent portion 24 is suppressed, and hence occurrence of the harmful effect as described above can be suppressed.

### (Fourth Embodiment)

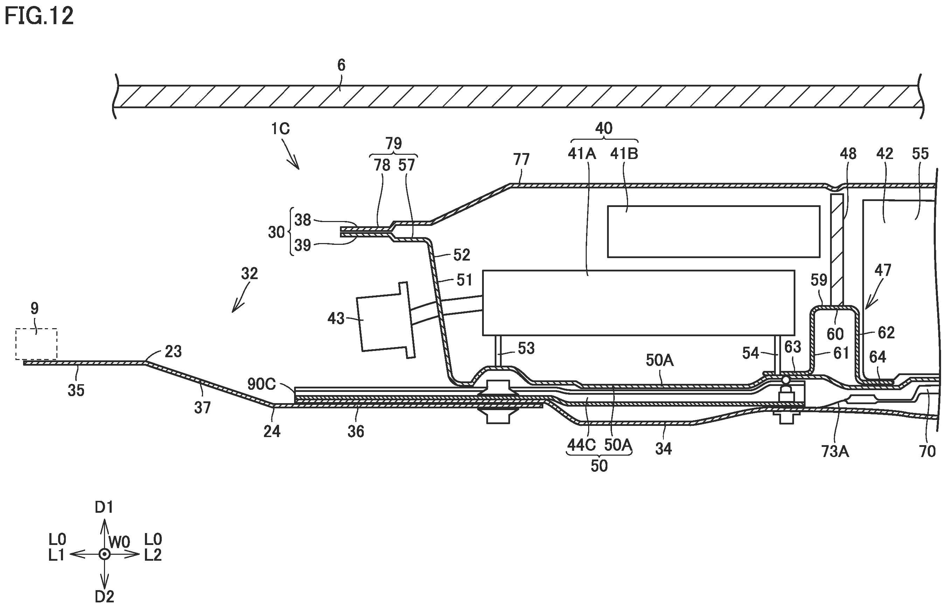

A power storage device 1C according to a fourth embodiment will be described with reference to Fig. 12 or the like. Power storage device 1C includes a reinforcement member 44C. Power storage device 1C is substantially similar in configuration to power storage device 1 except for reinforcement member 44C.

Fig. 12 is a cross-sectional view showing power storage device 1C. In front-rear direction L0, a front side 90C of reinforcement member 44C is located at the side of front direction L1 relative to a front end portion of flange 79.

Therefore, even when main body portion 37 is displaced at the time of deformation of protection plate 32 in such a manner that the bending angle of first bent portion 24 becomes smaller around first bent portion 24, front side 90C comes in contact with main body portion 37 so that contact of main body portion 37 with flange 79 can be suppressed. Damage to accommodation casing 30 can thus be suppressed.

### (Fifth Embodiment)

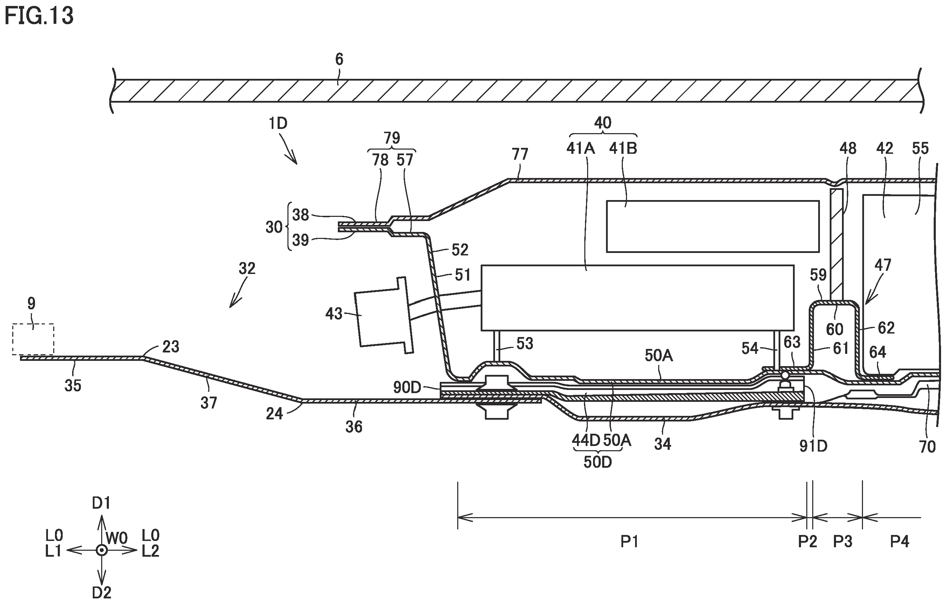

A power storage device 1D according to a fifth embodiment will be described with reference to Fig. 13 or the like. Power storage device 1D includes a bottom plate 50D. Power storage device 1D is substantially the same in configuration as power storage device 1 except for power storage device 1.

Fig. 13 is a cross-sectional view showing power storage device 1D. Bottom plate 50D includes a reinforcement member 44D and bottom main body 50A. Reinforcement member 44D includes a front side 90D located in front direction L1 and a rear side 91D located in rear direction L2.

Reinforcement member 44D is larger in thickness at rear side 91D than at front side 90D. Rear side 91D is higher in bending stiffness than front side 90D.

Therefore, a difference between bending stiffness of first portion P1 at a portion where rear side 91D is located and bending stiffness at second portion P2 becomes large. Consequently, when impact force is applied, displacement of a position of bending of bottom plate 50D from second portion P2 can be suppressed.

In addition, large deformation of a portion of bottom plate 50D where rear side 91D is located can be suppressed. Since equipment fixing portion 54 is located in the vicinity of rear side 91D and large deformation of rear side 91D and surroundings thereof can be suppressed, deformation of equipment fixing portion 54 which leads to damage to electrical equipment 40 can be suppressed.

In the example shown in this Fig. 13, the bottom plate is formed to increase in thickness from a side of front side 90D toward rear side 91D and to increase in bending stiffness from the side of front side 90D toward rear side 91D.

### (Sixth Embodiment)

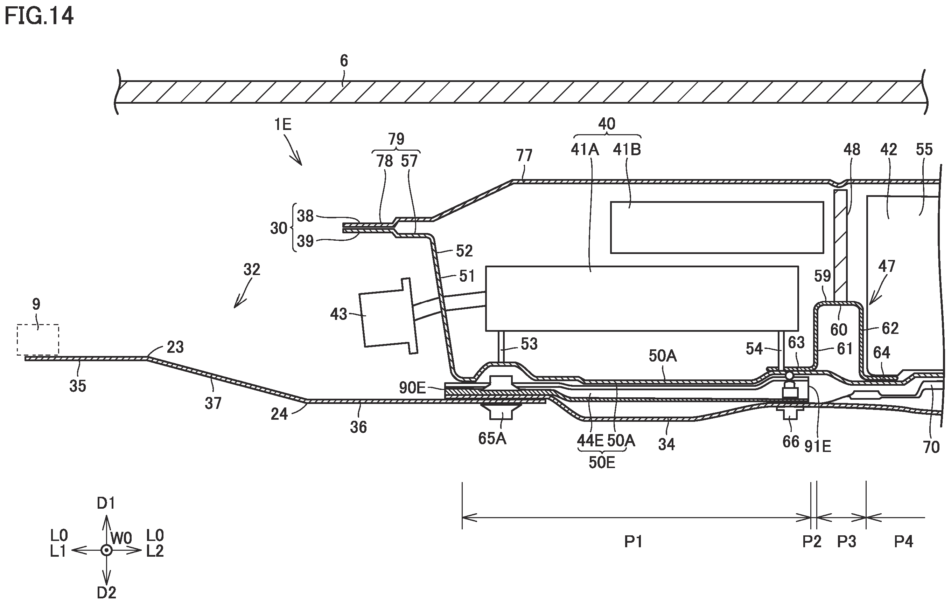

A power storage device 1E according to a sixth embodiment will be described with reference to Fig. 14 or the like. Power storage device 1E includes a bottom plate 50E. Power storage device 1E is substantially the same in configuration as power storage device 1 except for power storage device 1.

Fig. 14 is a cross-sectional view showing power storage device 1E. Bottom plate 50E includes a reinforcement member 44E and bottom main body 50A. Reinforcement member 44E includes a front side 90E located in front direction L1 and a rear side 91E located in rear direction L2.

Reinforcement member 44E is larger in thickness at front side 90E than at rear side 91E. Front side 90E is higher in bending stiffness than rear side 91E.

When a load and a bending moment in downward direction D2 are applied to a side of front side 90E through fixing member 65A at the time of collision, deformation of front side 90E and surroundings thereof in reinforcement member 44E is suppressed.

Consequently, first connection portion 36 is bent in the vicinity of fixing member 65A, and first connection portion 36 tends to be displaced downward around this bent portion. Contact of protection plate 32 with connector 43 can thus be suppressed.

Since large deformation of bottom plate 50E at the side of front side 90E is suppressed, deformation of equipment fixing portion 53 arranged in the vicinity of front side 90E is suppressed. Accordingly, damage to electrical equipment 40 can be suppressed.

### (Seventh Embodiment)

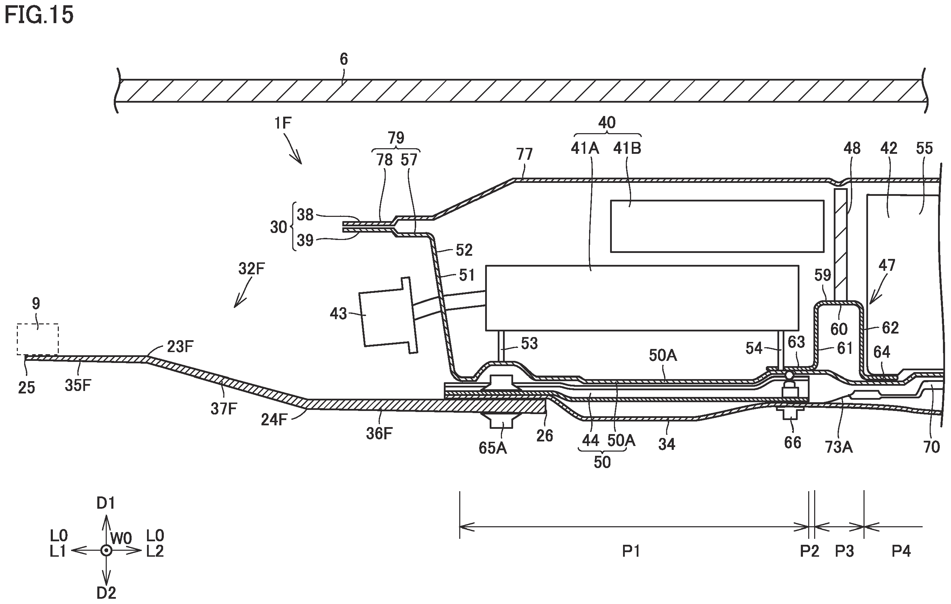

A power storage device 1F according to a seventh embodiment will be described with reference to Fig. 15 or the like. Power storage device 1F includes a protection plate 32F. Power storage device 1F is substantially the same in configuration as power storage device 1 except for protection plate 32F.

Fig. 15 is a cross-sectional view showing power storage device 1F. Protection plate 32F includes a first connection portion 36F, a main body portion 37F, a second connection portion 35F, a first bent portion 24F, a second bent portion 23F, a tip end portion 25, and a rear end portion 26. Tip end portion 25 is located at an end portion of protection plate 32F in front direction L1. Rear end portion 26 is located at an end portion of protection plate 32F in rear direction L2.

In protection plate 32F, rear end portion 26 is larger in thickness than tip end portion 25. Therefore, rear end portion 26 and surroundings thereof are higher in bending stiffness than tip end portion 25 and surroundings thereof. Therefore, when protection plate 32F is deformed, large deformation of rear end portion 26 and its vicinity can be suppressed. Accordingly, damage to electrical equipment 40 can be suppressed.

The thickness of protection plate 32F increases from a side of tip end portion 25 toward rear end portion 26. Therefore, when suspension member 9 is displaced rearward due to collision, deformation of first bent portion 24F is less likely, and contact of main body portion 37F with connector 43 which leads to damage to connector 43 can be suppressed.

The load and the bending moment applied from suspension member 9 to protection plate 32F, on the other hand, are easily transmitted to second portion P2, and bottom plate 50 can be bent at second portion P2.

### (Eighth Embodiment)

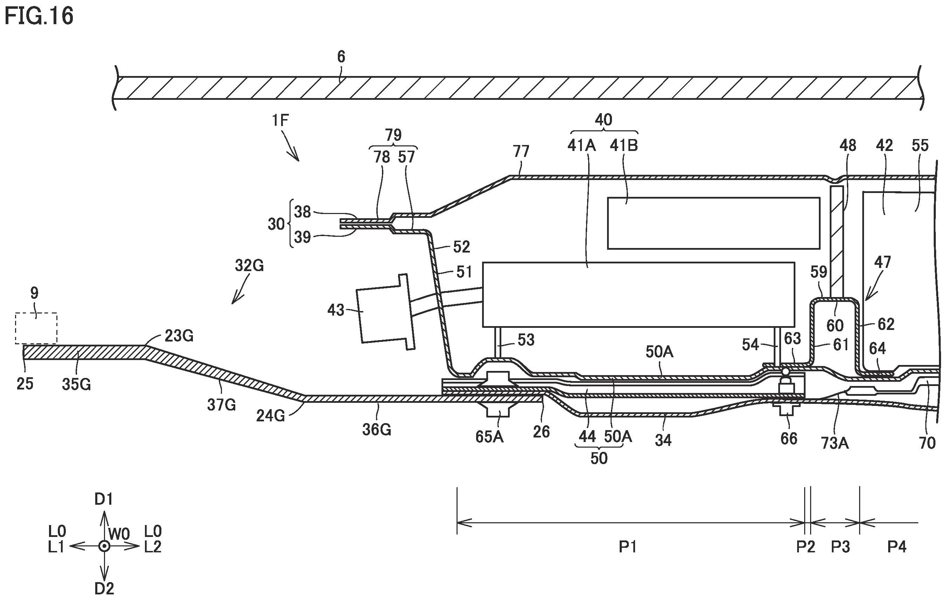

A power storage device 1G according to an eighth embodiment will be described with reference to Fig. 16 or the like. Power storage device 1G includes a protection plate 32G. Power storage device 1G is substantially the same in configuration as power storage device 1 except for protection plate 32G.

Fig. 16 is a cross-sectional view showing power storage device 1G. Protection plate 32G includes a first connection portion 36G, a main body portion 37G, a second connection portion 35G, a first bent portion 24G, a second bent portion 23G, tip end portion 25, and rear end portion 26.

Tip end portion 25 is larger in thickness than rear end portion 26, and tip end portion 25 is higher in bending stiffness than rear end portion 26.

Therefore, even when impact force is applied from suspension member 9 to second connection portion 5G, a state of connection between second connection portion 35G and suspension member 9 can be maintained. The load and the bending moment can thus be transmitted to second portion P2.

In the example shown in this Fig. 16, protection plate 32G is formed such that the thickness thereof increases from first bent portion 24G toward tip end portion 25.

When impact force is applied from suspension member 9 to protection plate 32G, a large load will be applied particularly to a portion between first bent portion 24G and tip end portion 25. Therefore, the portion located between first bent portion 24G and tip end portion 25 may be damaged or broken. In this protection plate 32G, on the other hand, occurrence of the harmful effects as described above can be suppressed.

Protection plate 32G may increase in thickness from rear end portion 26 toward tip end portion 25.

### (Ninth Embodiment)

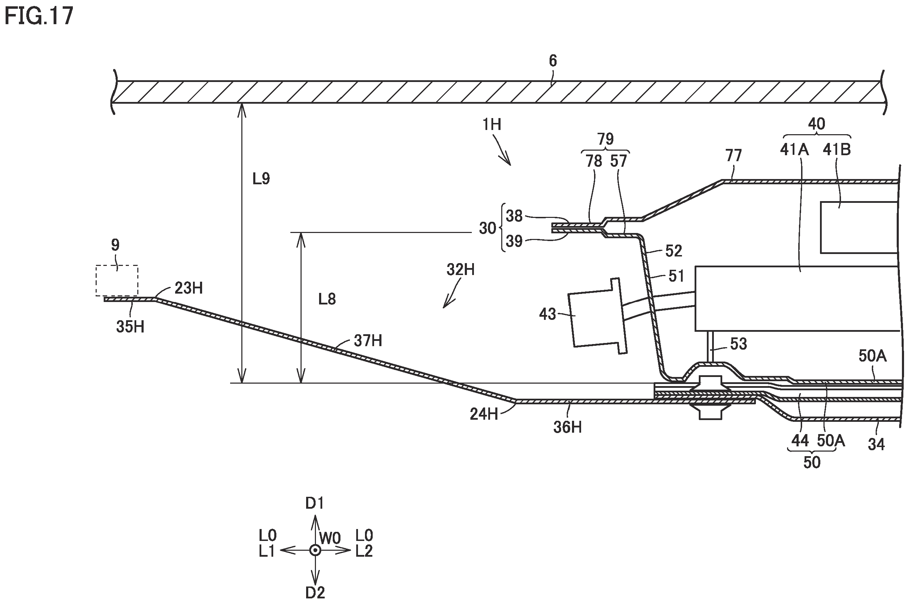

A power storage device 1H according to a ninth embodiment will be described with reference to Fig. 17 or the like. Power storage device 1H includes a protection plate 32H. Power storage device 1H is substantially the same in configuration as power storage device 1 except for protection plate 32H.

Fig. 17 is a cross-sectional view showing power storage device 1H. Protection plate 32H includes a first connection portion 36H, a main body portion 37H, a second connection portion 35H, a first bent portion 24H, a second bent portion 23H, tip end portion 25, and rear end portion 26.

Connector 43 is located at the side of rear direction L2 relative to at least one of tip end portions of lower flange 57, flange 78, and flange 79 at the side of front direction L1.

A distance in an upward-downward direction D0 from bottom plate 50 to accommodation casing 30 is defined as a distance L8, and a distance in upward-downward direction D0 from bottom plate 50 to floor panel 6 is defined as a distance L9.

A length of main body portion 37H is longer than distance L8. Therefore, even when protection plate 32H rotates around first bent portion 24H to come closer to accommodation casing 30, main body portion 37H comes in contact with any one of lower flange 57, flange 78, and flange 79, and contact thereof with connector 43 is suppressed. Damage to connector 43 can thus be suppressed.

In the example shown in this Fig. 17, the length of main body portion 37H is longer than distance L9. Therefore, even when protection plate 32H rotates around first bent portion 24H to come closer to accommodation casing 30, main body portion 37H comes in contact with floor panel 6 before it comes in contact with accommodation casing 30. Damage to accommodation casing 30 can thus be suppressed.

### (Tenth Embodiment)

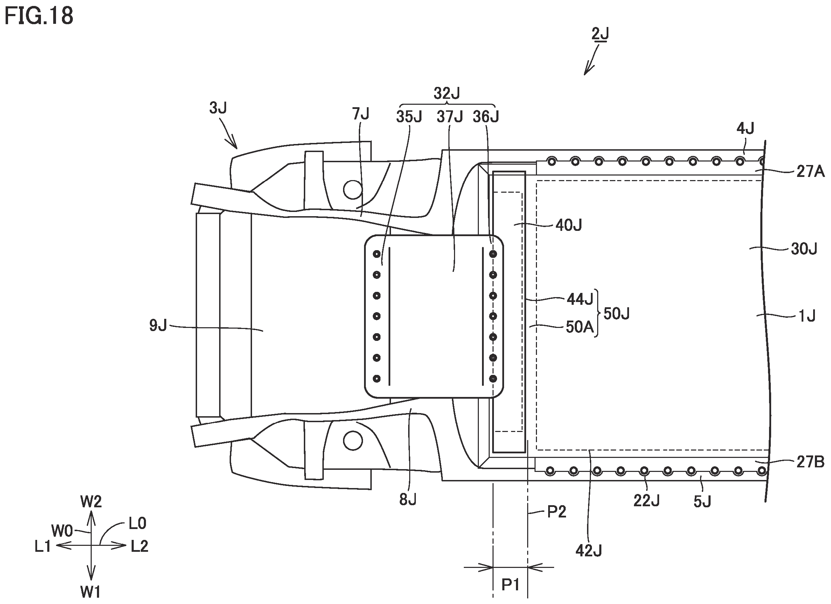

A power storage device 1J according to a tenth embodiment and a vehicle 2J provided with power storage device 1J will be described with reference to Fig. 18 or the like.

Various fixing structures can be adopted as a fixing structure of the power storage device to vehicle skeleton 10. This power storage device 1J is fixed between a left side rocker 4J and a right side rocker 5J.

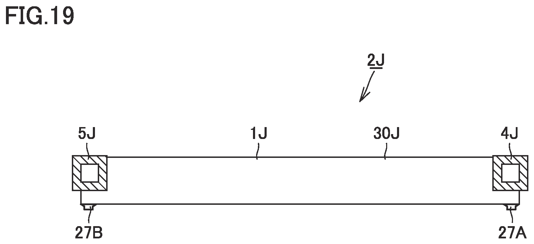

Fig. 18 is a bottom view showing a bottom of vehicle 2J. Fig. 19 is a cross-sectional view schematically showing vehicle 2J and power storage device 1J.

Vehicle 2J is a battery electric vehicle. Vehicle 2J includes power storage device 1J, a drive motor and a PCU neither of which is shown, and a vehicle skeleton 10J.

Vehicle skeleton 10J includes left side rocker 4J, right side rocker 5J, a left front side member 7J, a right front side member 8J, and a front panel 9J. The drive motor and the PCU are arranged above front panel 9J. In the example shown in this Fig. 18, for example, vehicle 2J is not provided with a floor panel. Power storage device 1J also functions as the floor panel, and power storage device 1J serves as a partition between a compartment space and a space outside the vehicle. In the example shown in Fig. 18, instead of the floor panel, the upper case of the accommodation casing functions as the floor panel. An upper cover of the accommodation casing, however, does not have to be provided and the floor panel may function as the upper case. In this case, an opening of the lower case is closed by the floor panel, and electrical equipment 40, power storage stack 42, and the like are accommodated in a space defined by the lower case and the floor panel.

Power storage device 1J shown in Fig. 18 is fixed to left side rocker 4J and right side rocker 5J. Power storage device 1J includes an accommodation casing 30J, a fixing flange 27A and a fixing flange 27B, and a protection plate 32J. An internal structure of accommodation casing 30J is configured similarly to that of power storage device 1.

Therefore, a bottom plate 50J of accommodation casing 30J includes bottom main body 50A and a reinforcement member 44J, and first portion P1 and second portion P2 are formed in bottom plate 50J.

Protection plate 32J includes a first connection portion 36J, a main body portion 37J, and a second connection portion 35J. First connection portion 36J is fixed to reinforcement member 44J of bottom plate 50J, and second connection portion 35J is connected to front panel 9J.

The power storage device according to the present disclosure can thus be applied to an electrically powered vehicle such as a hybrid electric vehicle, a plug-in hybrid electric vehicle, and a battery electric vehicle.

In the present embodiment, bottom plate 50 of accommodation casing 30 corresponds to the "fixing base material," however, the "fixing base material" is not limited to bottom plate 50. For example, a sidewall of accommodation casing 30 may serve as the fixing base material, and the fixing base material is not limited to bottom plate 50.

In the present embodiment, bottom plate 50 as the fixing base material includes bottom main body 50A and reinforcement member 44. For example, however, instead of reinforcement member 44, a large thickness portion may be formed integrally with bottom main body 50A to form a reinforcement portion. Though reinforcement member 44 corresponds to the "reinforcement portion," various configurations can be adopted as the reinforcement portion. For example, as the reinforcement portion, a rib extending in front-rear direction L0 may be provided at bottom main body 50A, or a member having a high Young's modulus and extending in front-rear direction L0 may be arranged. In this case, the rib as the reinforcement portion is higher in Young's modulus than a portion of bottom main body 50A where the rib is not provided.

In the present embodiment, though second bent portion 23 and first bent portion 24 are formed in protection plate 32, such bent portions do not have to be formed in protection plate 32. For example, first connection portion 36 and second connection portion 35 may smoothly be connected to each other. Vehicle skeleton 10 may include a member located above partition member 47 and extending in vehicle width direction WO.

### (Eleventh Embodiment)

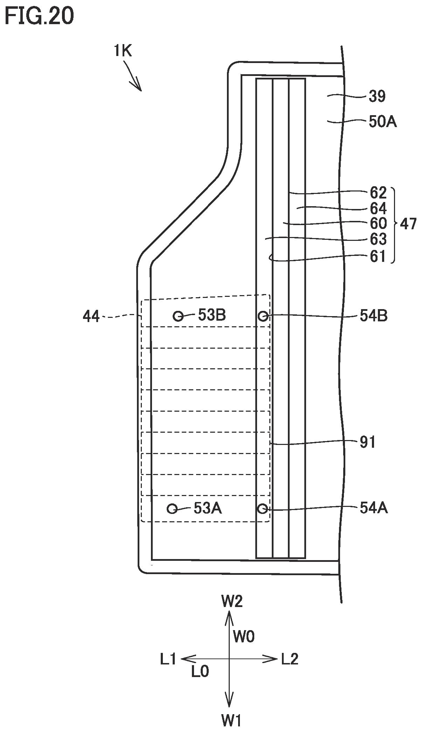

A power storage device 1K according to an eleventh embodiment will be described with reference to Fig. 20 or the like. Fig. 20 is a plan view schematically showing lower case 39, reinforcement member 44, and equipment fixing portions 53A and 53B and equipment fixing portions 54A and 54B. Upper case 38 and the like are not shown in this Fig. 20.

Reinforcement member 44 is provided at the lower surface of bottom main body 50A of lower case 39. Equipment fixing portions 53A and 53B and equipment fixing portions 54A and 54B are members for fixing electrical equipment 40 to bottom main body 50A.

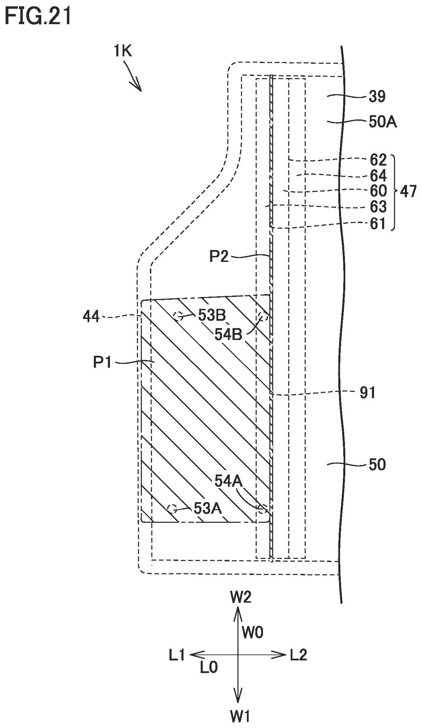

Fig. 21 is a plan view schematically showing a distribution of bending stiffness. In the example shown in Fig. 21 as well, first portion P1 is located at the side of front direction L1 relative to rear side 91 of reinforcement member 44 in bottom plate 50. Second portion P2 is located between rear side 91 and longitudinal wall 61.

In a plan view, first portion P1 is located in a region where reinforcement member 44 is located, and equipment fixing portions 53A and 53B and equipment fixing portions 54A and 54B are provided in first portion P1.

All of equipment fixing portions 53A and 53B and equipment fixing portions 54A and 54B are thus fixed to first portion P1. Therefore, even when impact force is applied to power storage device 1K from the side of front direction L1, equipment fixing portions 53A and 53B and equipment fixing portions 54A and 54B will integrally be displaced.

In particular, in power storage device 1K, in a plan view, equipment fixing portions 53A and 53B and equipment fixing portions 54A and 54B are arranged at positions where they are superimposed on reinforcement member 44.

Equipment fixing portions 53A and 53B and equipment fixing portions 54A and 54B thus tend to readily integrally be displaced when impact force is applied to power storage device 1K.

### (Twelfth Embodiment)

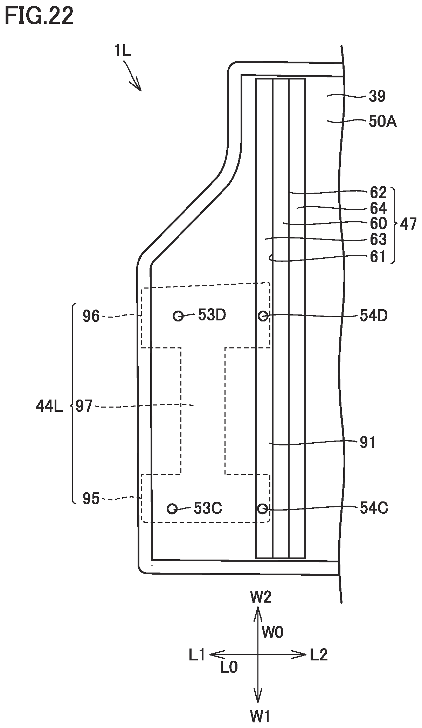

A power storage device 1L will be described with reference to Fig. 22 or the like. Fig. 22 is a plan view schematically showing lower case 39, a reinforcement member 44L, and equipment fixing portions 53C and 53D and equipment fixing portions 54C and 54D.

Reinforcement member 44L includes a plate portion 95, a plate portion 96, and a connection portion 97. Plate portion 95 and plate portion 96 are provided at an interval in vehicle width direction WO, and connection portion 97 is formed to connect plate portion 95 and plate portion 96 to each other.

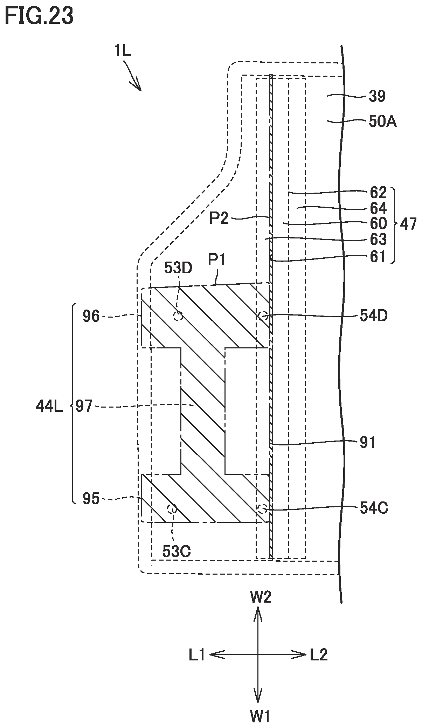

Fig. 23 is a plan view schematically showing a distribution of bending stiffness.

In this power storage device 1L, first portion P1 is located in a region where reinforcement member 44L is located. Second portion P2 is located at the side of rear direction L2 relative to first portion P1.

Equipment fixing portions 53C and 53D and equipment fixing portions 54C and 54D are fixed to first portion P1. Therefore, if impact force is applied to power storage device 1L from the side of front direction L1, equipment fixing portions 53C and 53D and equipment fixing portions 54C and 54D will integrally be displaced.

### (Thirteenth Embodiment)

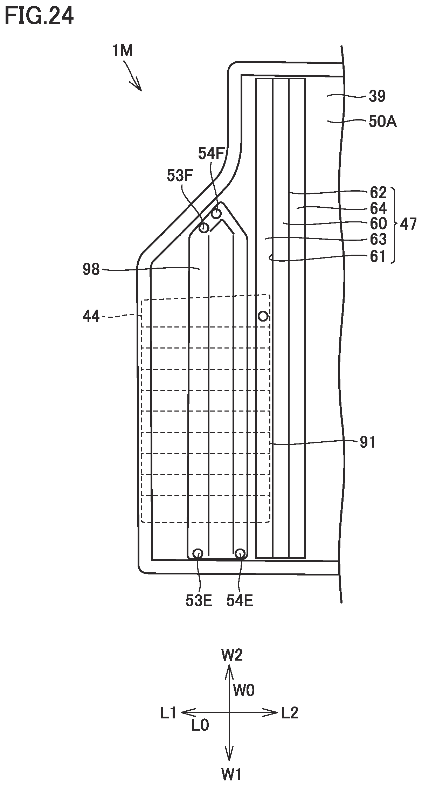

A power storage device 1M will be described with reference to Fig. 24 or the like. Fig. 24 is a plan view schematically showing lower case 39, reinforcement member 44, and equipment fixing portions 53E and 53F and equipment fixing portions 54E and 54F.

Power storage device 1M further includes an inner reinforcement member 98 in addition to the configuration of power storage device 1 in the first embodiment. Inner reinforcement member 98 is arranged at lower case 39 and fixed to an upper surface of bottom main body 50A.

Equipment fixing portions 53E and 53F and equipment fixing portions 54E and 54F are fixed to inner reinforcement member 98.

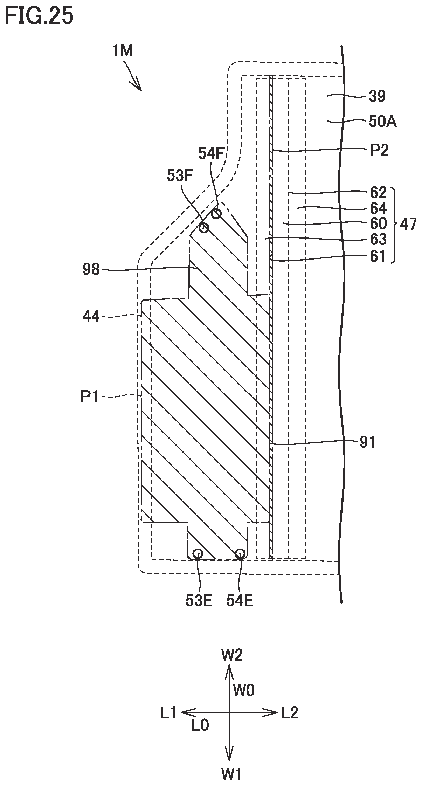

Fig. 25 is a plan view schematically showing a distribution of bending stiffness. In a plan view, first portion P1 is located in a portion where inner reinforcement member 98 and reinforcement member 44 are located. Second portion P2 is located at the side of rear direction L2 relative to first portion P1.

Equipment fixing portions 53E and 53F and equipment fixing portions 54E and 54F are fixed to first portion P1. Therefore, when impact force is applied to power storage device 1M from front direction L1, equipment fixing portions 53E and 53F and equipment fixing portions 54E and 54F are integrally displaced.

It should be understood that the embodiments disclosed herein are illustrative and non-restrictive in every respect. The scope of the present disclosure is defined by the terms of the claims and is intended to include any modifications within the scope and meaning equivalent to the terms of the claims.

### REFERENCE SIGNS LIST

1, 1A, 1B, 1C, 1D, 1E, 1F, 1G, 1H, 1J power storage device; 2, 2J vehicle; 3, 10, 10J body skeleton; 4, 4J left side rocker; 5, 5J right side rocker; 5G, 35, 35F, 35G, 35H, 35J second connection portion; 6 floor panel; 7, 7J left front side member; 8, 8J right front side member; 9 suspension member; 9J front panel; 11 drive device; 12 exhaust pipe; 13 accommodation space; 14 compartment space; 15 engine; 16, 17 motor generator; 19 driving wheel; 20 charging portion; 21 fuel tank; 22 heat insulating cover; 23, 23F, 23G, 23H second bent portion; 24, 24F, 24G, 24H first bent portion; 24B reinforcement plate; 25 tip end portion; 26 rear end portion; 27A, 27B fixing flange; 29 impact absorbing member; 30, 30J accommodation casing; 31, 73, 73A fixing bracket; 32, 32A, 32B, 32F, 32G, 32H, 32J, 33 protection plate; 34 shear panel; 36, 36F, 36G, 36H, 36J first connection portion; 36A large thickness portion; 36B small thickness portion; 37, 37A, 37F, 37G, 37H, 37J main body portion; 38 upper case; 39 lower case; 40 electrical equipment; 41A connection equipment; 41B control equipment; 42 power storage stack; 43 connector; 44, 44C, 44D, 44E, 44J reinforcement member; 46 cooling device; 47 partition member; 48 separation wall; 50, 50D, 50E, 50J bottom plate; 50A bottom main body; 51 peripheral wall; 52 front wall; 53, 54 equipment fixing portion; 55 power storage module; 57 lower flange; 59 main body; 60, 77 top plate; 61, 62 longitudinal wall; 63, 64, 78, 79 flange; 65, 65A, 65B, 66 fixing member; 67, 68 welded portion; 69A, 69B bulging portion; 70 cooling main body; 71 refrigerant circulation portion.

## Claims

1. A power storage device comprising:
an accommodation casing;
a power storage stack accommodated in the accommodation casing;
electrical equipment accommodated in the accommodation casing; and
a coupling member provided in the accommodation casing, wherein
with a direction from the power storage stack toward the electrical equipment being defined as a first direction and with a direction opposite to the first direction being defined as a second direction,
the accommodation casing includes a fixing base material,
the fixing base material includes
a first portion, and
a second portion provided at a position adjacent to the first portion in the second direction, the second portion being lower in bending stiffness than the first portion,
the electrical equipment is fixed to the first portion,
the coupling member includes
a first connection portion connected to the first portion,
a second connection portion located at a side of the first direction relative to the first connection portion, located above the first connection portion, and connected to a vehicle, and
a main body portion located between the first connection portion and the second connection portion, and
the main body portion includes a portion that extends upward from a side of the first connection portion toward the second connection portion.

2. The power storage device according to claim 1, wherein
the first portion includes a reinforcement portion.

3. A power storage device comprising:
an accommodation casing;
a power storage stack accommodated in the accommodation casing;
electrical equipment accommodated in the accommodation casing; and
a coupling member provided in the accommodation casing, wherein
with a direction from the power storage stack toward the electrical equipment being defined as a first direction and with a direction opposite to the first direction being defined as a second direction,
the accommodation casing includes a fixing base material,
the fixing base material includes
a first portion, and
a second portion adjacent to the first portion in the second direction,
the first portion includes a reinforcement portion,
the electrical equipment is fixed to the first portion,
the coupling member includes
a first connection portion fixed to the first portion,
a second connection portion located in the first direction relative to the first connection portion, located above the first connection portion, and fixed to a vehicle, and
a main body portion located between the first connection portion and the second connection portion, and
the main body portion includes a portion that extends upward from a side of the first connection portion toward the second connection portion.

4. The power storage device according to claim 2 or 3, further comprising a first equipment fixing portion and a second equipment fixing portion that fix the electrical equipment to the fixing base material of the accommodation casing, wherein
the first equipment fixing portion is located at a side of the first direction relative to the second equipment fixing portion,
an end portion of the reinforcement portion located at the side of the first direction is located at the side of the first direction relative to the first equipment fixing portion, and
an end portion of the reinforcement portion located at a side of the second direction is located at the side of the second direction relative to the second equipment fixing portion.

5. The power storage device according to claim 4, wherein
the accommodation casing includes a lower case,
the reinforcement portion includes an outer reinforcement member provided at a lower surface of the lower case, and
when the lower case and the outer reinforcement member are viewed in a plan view, the first equipment fixing portion and the second equipment fixing portion are provided in a portion where the outer reinforcement member is located.

6. The power storage device according to claim 4, wherein
the accommodation casing includes a lower case,
the reinforcement portion includes an outer reinforcement member provided at a lower surface of the lower case and an inner reinforcement member provided at an upper surface of the lower case, and
when the lower case, the outer reinforcement member, and the inner reinforcement member are viewed in a plan view, the first equipment fixing portion and the second equipment fixing portion are provided in a portion where the outer reinforcement member and the inner reinforcement member are located.

7. The power storage device according to claim 2 or 3, wherein
the coupling member is fixed to the reinforcement portion.

8. The power storage device according to claim 2 or 3, wherein
the electrical equipment is fixed to an upper surface of the fixing base material,
the coupling member is fixed to a lower surface of the fixing base material, and
an overlapping portion of the coupling member that overlaps with the electrical equipment in an upward-downward direction is higher in bending stiffness than a portion adjacent to the overlapping portion in the first direction.

9. The power storage device according to claim 2 or 3, wherein
the coupling member includes
a first bent portion formed by the first connection portion and the main body portion, and
a second bent portion formed by the second connection portion and the main body portion, and
the first bent portion is higher in bending stiffness than the second bent portion.

10. The power storage device according to claim 2 or 3, wherein
the accommodation casing includes a partition member provided at the fixing base material and located at a side of the second direction relative to the second portion,
the partition member includes
a partition main body that extends upward from the fixing base material,
a first flange that extends toward the first direction from a lower end portion of the partition main body, and
a second flange that extends toward the second direction from the lower end portion of the partition main body, and
an end portion of the reinforcement portion at the side of the second direction is located below the first flange.

11. The power storage device according to claim 2 or 3, further comprising a connector connected to the electrical equipment and drawn out of the accommodation casing in the first direction, wherein
the coupling member includes
a first bent portion formed by the first connection portion and the main body portion, and
a second bent portion formed by the second connection portion and the main body portion, and
the first bent portion is located at the side of the first direction relative to the connector.

12. The power storage device according to claim 2 or 3, wherein
the accommodation casing includes an upper case and a lower case located below the upper case,
the lower case includes the fixing base material, a peripheral wall portion that extends upward from the fixing base material, and a case flange formed at an upper end of the peripheral wall portion, and
an end portion of the reinforcement portion located in the first direction is located at the side of the first direction relative to the case flange.

13. The power storage device according to claim 2 or 3, wherein
the accommodation casing further includes a separation wall that extends upward from a side of the fixing base material, and
the separation wall is formed to extend above the electrical equipment.

14. The power storage device according to claim 13, wherein
the accommodation casing includes an upper case and a lower case located below the upper case,
the lower case includes
the fixing base material, and
a peripheral wall portion that extends upward from the fixing base material, and
the separation wall is connected to the peripheral wall portion.

15. The power storage device according to claim 2 or 3, wherein
the reinforcement portion includes
a first reinforcement end portion located at the side of the first direction, and
a second reinforcement end portion located at a side of the second direction, and
the second reinforcement end portion is higher in bending stiffness than the first reinforcement end portion.

16. The power storage device according to claim 2 or 3, wherein
the reinforcement portion includes
a first reinforcement end portion located at the side of the first direction, and
a second reinforcement end portion located at a side of the second direction, and
bending stiffness of the reinforcement portion increases from a side of the second reinforcement end portion toward the first reinforcement end portion.

17. The power storage device according to claim 2 or 3, wherein
the coupling member includes
a first coupling end portion located at the side of the first direction, and
a second coupling end portion located at a side of the second direction, and
bending stiffness increases from a side of the second coupling end portion toward the first coupling end portion.

18. The power storage device according to claim 2 or 3, wherein
the coupling member includes
a first coupling end portion located at the side of the first direction, and
a second coupling end portion located at a side of the second direction, and
at least a portion of the coupling member is provided with a portion where bending stiffness increases from a side of the second coupling end portion toward the first coupling end portion.

19. The power storage device according to claim 2 or 3, further comprising a connector connected to the electrical equipment and drawn out of the accommodation casing in the first direction, wherein
the accommodation casing includes an upper case and a lower case located below the upper case,
the lower case includes
the fixing base material,
a peripheral wall portion that extends upward from the fixing base material, and
a case flange formed at an upper end of the peripheral wall portion and projecting toward the first direction,
the coupling member includes
a first bent portion formed by the first connection portion and the main body portion, and
a second bent portion formed by the second connection portion and the main body portion, and
a length of the main body portion is longer than a length in an upward-downward direction of the case flange and the fixing base material.

20. A vehicle comprising:
the power storage device according to claim 2 or 3, wherein
the vehicle comprises a floor panel,
the power storage device is arranged below the floor panel,
the coupling member includes
a first bent portion formed by the first connection portion and the main body portion, and
a second bent portion formed by the second connection portion and the main body portion, and
a length of the main body portion is longer than a length in an upward-downward direction of the floor panel and the fixing base material.

21. A vehicle comprising:
a vehicle skeleton; and
a power storage device arranged at a bottom of the vehicle skeleton, wherein
the power storage device includes
an accommodation casing,
a power storage stack accommodated in the accommodation casing, electrical equipment accommodated in the accommodation casing, and
a coupling member provided in the accommodation casing,
with a direction from the power storage stack toward the electrical equipment being defined as a first direction and with a direction opposite to the first direction being defined as a second direction,
the accommodation casing includes a fixing base material,
the fixing base material includes
a first portion, and
a second portion provided at a position adjacent to the first portion in the second direction and being lower in bending stiffness than the first portion,
the electrical equipment is fixed to the first portion,
the coupling member includes
a first connection portion connected to the first portion,
a second connection portion located at a side of the first direction relative to the first connection portion, located above the first connection portion, and connected to the vehicle, and
a main body portion located between the first connection portion and the second connection portion, and
the main body portion includes a portion that extends upward from a side of the first connection portion toward the second connection portion.

22. The vehicle according to claim 21, wherein
the first portion includes a reinforcement portion.

23. A vehicle comprising:
a vehicle skeleton; and
a power storage device arranged at a bottom of the vehicle skeleton, wherein
the power storage device includes
an accommodation casing,
a power storage stack accommodated in the accommodation casing, electrical equipment accommodated in the accommodation casing, and a coupling member provided in the accommodation casing,
with a direction from the power storage stack toward the electrical equipment being defined as a first direction and with a direction opposite to the first direction being defined as a second direction,
the accommodation casing includes a fixing base material,
the fixing base material includes
a first portion, and
a second portion adjacent to the first portion in the second direction,
the first portion includes a reinforcement portion,
the electrical equipment is fixed to the first portion,
the coupling member includes
a first connection portion fixed to the first portion,
a second connection portion located at vehicle front relative to the first connection portion, located above the first connection portion, and fixed to the vehicle, and
a main body portion located between the first connection portion and the second connection portion, and
the main body portion includes a portion that extends upward from a side of the first connection portion toward the second connection portion.
